# EUROPÄISCHE PATENTSCHRIFT

(11) **EP 0 581 143 B1**
(45) Veröffentlichungstag und Bekanntmachung des Hinweises auf die Patenterteilung: **24.09.1997**
(21) Anmeldenummer: 93111441.7
(22) Anmeldetag: 16.07.1993
(51) Int. Cl.: A24C 5/35, B65G 47/51

(54) **Fördervorrichtung für Zigaretten**
Apparatus for feeding cigarettes
Dispositif de transport de cigarettes

(30) Priorität: 25.07.1992 DE 4224609
(43) Veröffentlichungstag der Anmeldung: 02.02.1994
(60) Teilanmeldung: 97102556.4
(73) Patentinhaber: Hauni Maschinenbau Aktiengesellschaft, D-21033 Hamburg (DE)
(72) Erfinder: Golz, Peter, D-21217 Seevetal (DE); Rinke, Andreas, D-23843 Bad Oldesloe (DE); Krössmann, Jürgen, D-19063 Schwerin (DE)

(56) Entgegenhaltungen:
- FR-A- 1 395 589
- GB-A- 1 301 843
- GB-A- 2 047 667
- GB-A- 2 143 788

## Beschreibung

Die Erfindung betrifft eine Vorrichtung zum Fördern von Artikeln entlang einer Förderstrecke, insbesondere zum Fördern eines Massenstroms stabförmiger Artikel der tabakverarbeitenden Industrie, entsprechend dem Oberbegriff des Anspruchs 1.

Die im folgenden beschriebene Vorrichtung ist zwar besonders im Hinblick auf das allgemein übliche Fördern von Zigaretten oder anderen stabförmigen Artikeln der tabakverarbeitenden Industrie in einem mehrlagigen Massenstrom konzipiert, kann aber prinzipiell auch zum Fördern anderer für den liegenden Transport geeigneter Artikel wie in einer Reihe mit oder ohne Abstand aufeinanderfolgender Gegenstände, Packungen, Artikelgruppen und dergleichen verwendet werden. Dabei sind unter stabförmigen Artikeln der tabakverarbeitenden Industrie in erster Linie Filter- oder Plainzigaretten, Zigarillos, Stumpen und sonstige rauchbare Artikel aus Tabak oder Tabakersatzstoffen, rauchlose Zigaretten, Filterstäbe und dergleichen zu verstehen.

In modernen Produktionsanlagen sind Maschinen unterschiedlicher Art, die Artikel herstellen, be- und verarbeiten, verpacken usw., über Förderstrecken und Speichereinrichtungen miteinander verbunden. Die Speichereinrichtungen dienen dazu, Leistungsdifferenzen der miteinander verbundenen Maschinen auszugleichen, um einen möglichst kontinuierlichen Arbeitsablauf sicherzustellen, auch wenn einzelne der miteinander verbundenen Maschinen gestört sind oder Zeitweilig ganz ausfallen.

Eine Anlage mit einer Maschine zum Herstellen und einer Maschine zum Verpacken von Zigaretten, die über eine Massenstromförderstrecke miteinander verbunden sind, ist in der DE 33 45 117 A1 und der entsprechenden GB 2 133 759 A beschrieben. Zum Ausgleich von Leistungsdifferenzen der Maschinen sind Speicher einrichtungen vorgesehen, von denen eine als Wendelförderer ausgebildet ist, der im Bedarfsfall auf einem wendelförmig um eine Achse geführten Bandförderer aus der Förderstrecke abgezweigte Artikel aufnimmt bzw. gespeicherte Artikel in die Förderstrecke abgibt. Dieser Speicher hat zwar auf kleinem Raum ein relativ großes Speichervolumen, hat aber den Nachteil, daß Artikel, die zuerst im Speicher aufgenommen werden, zuletzt abgegeben werden. Da der Speicher bei optimalem Betrieb nicht leergefahren wird, bleiben die zuerst in die Speicherstrecke gelangten Artikel lange darin und können dadurch unbrauchbar werden. Das hat unerwünschte Verluste zur Folge.

Durch die DE-OS 2 234 287 ist eine Fördervorrichtung mit einem Bandförderer bekannt, der von einer Aufgabestelle nacheinander in entgegengesetzten Richtungen durch zwei benachbarte Wendelstrecken zu einer Abgabestelle verläuft. Hierbei handelt es sich um eine Durchlaufstrecke konstanter Länge, auf der die geförderten Artikel während des Transports für eine bestimmte Zeit in einem vorgegebenen Raum bzw. Bereich bleiben und bestimmten Behandlungen unterworfen werden können. So können in einer solchen Förderstrecke Lebensmittel Behandlungen wie Frosten, Erhitzen, Sterilisieren usw. unterzogen werden, die eine gewisse Behandlungszeit erfordern. Als Speicher zum Ausgleichen von Leistungsdifferenzen angeschlossener Maschinen ist diese bekannte Vorrichtung nicht geeignet.

Die GB-PS 1 301 843 beschreibt eine Vorrichtung der eingangs angegebenen Art. Diese Vorrichtung weist zwei als Wendeln ausgebildete Führungsbahnabschnitte auf, deren Windungen einen ovalen Verlauf um zwei gemeinsame, zueinander verfahrbare, vertikale Säulen haben. Der Förderweg verläuft in einer Wendel aufwärts, geht oben in die andere Wendel über und verläuft in dieser abwärts. Zur Vergrößerung der Aufnahmekapazität wird die Förderstrecke verlängert, indem die Säulen weiter voneinander entfernt werden. Durch gegenseitiges Annähern der Säulen ergeben sich eine Verkürzung des Förderweges und eine Verringerung der Aufnahmekapazität. Diese Vorrichtung hat den Nachteil hohen konstruktiven und funktionstechnischen Aufwands. Zur Veränderung der Förderstrecke muß wenigstens eine der Säulen samt aller Führungseinrichtungen für den Bandförderer verfahren werden, was die Bewegung großer Massen bedeutet. Dazu muß jede Windung der Wendeln zwei längenvariable Abschnitte aufweisen, was die Anforderungen an den mechanischen Aufbau sehr erhöht. Die bekannte Vorrichtung scheint daher wenig praktikabel zu sein.

Durch die FR-PS 1 395 589 und die GB 2 143 788 sind weitere Vorrichtungen zum Speichern von stabförmigen Artikeln der tabakverarbeitenden Industrie mit längenvariablen Förderstrecken bekannt. Diese Förderstrecken verlaufen aber im wesentlichen linear horizontal und weisen daher einen nicht vergleichbaren Aufbau auf.

Der Erfindung liegt die Aufgabe zugrunde eine Vorrichtung der eingangs angegebenen Art weiter zu verbessern, insbesondere eine neue Speichermöglichkeit für entlang einer Förderstrecke bewegte Artikel, insbesondere stabförmige Artikel der tabakverarbeitenden Industrie anzugeben.

Gelöst wird diese Aufgabe erfindungsgemäß durch die im Kennzeichen des Anspruchs 1 angegebenen Mittel. Dabei wirkt die Förderstrecke selbst als Speicher. Ist die die Artikel aufnehmende Maschine gestört oder fällt sie aus, so wird die Förderstrecke verlängert, so daß sie die von der vorangehenden Maschine abgegebenen Artikel aufnimmt und speichert, bis die gestörte Maschine wieder arbeitet. Umgekehrt werden der die Artikel aufnehmenden Maschine Artikel aus der Förderstrecke zugeführt, indem diese verkürzt wird, wenn die die Artikel abgebende Maschine nicht arbeitet.

Die beiden Führungsbahnwendeln können gemäß der Erfindung mit unterschiedlichen Radien konzentrisch um eine gemeinsame vertikale Achse herum angeordnet sein oder sie verlaufen in demselben Radius um die gemeinsame vertikale Achse, wobei die Windungen der einen Wendel im freien Raum zwischen den Windungen der anderen Wendel angeordnet sind. Die Anordnung der Führungsbahn gemäß der Erfindung in konzentrischen Wendeln erfordert auch für große Längen der Förderstrecke und damit für eine große Speicherkapazität nur relativ wenig Platz und bietet einfache Möglichkeiten für die Veränderung der Länge der Förderstrecke. Diese wird gemäß einer bevorzugten Weiterbildung der Erfindung dadurch realisiert, daß als Mittel zum Verändern der Länge der Förderstrecke ein die beiden Führungsbahnabschnitte verbindendes, die Förderstrecke von einem der Führungsbahnabschnitte zum anderen überführendes Brückenelement vorgesehen ist und daß das Brückenelement relativ zu den beiden Führungsbahnabschnitten verfahrbar ist. Mit dem verstellbaren Brückenelement kann die Länge der Förderstrecke im Rahmen der Länge der Führungsbahnabschnitte beliebig variiert werden. Die Förderstrecke durchläuft also nicht die volle Länge der Führungsbahnabschnitte, sondern sie wird vor dem Ende der Führungsbahnabschnitte entsprechend der jeweils erforderlichen Speicherkapazität über das Brückenelement von einem der Führungsbahnabschnitte zum anderen umgelenkt. Dazu weist das Brückenelement in weiterer Ausgestaltung der Erfindung ein die Förderstrecke von einem der Führungsbahnabschnitte auf das Brückenelement umleitendes Aufnahmeende und ein die Förderstrecke auf den anderen Führungsbahnabschnitt weiterführendes Abgabeende auf.

Das Aufnahmeende und das Abgabeende werden beim Verfahren des Brückenelements an dem jeweils zugehörigen Führungsbahnabschnitt entlang in bzw. entgegen der Förderrichtung der Artikel bewegt.

Merkmale weiterer Fortführungen der Erfindung und vorteilhafter Ausgestaltungen sind in den Unteransprüchen 5 bis 17 enthalten. Dabei geben die Ansprüche 5 und 6 Merkmale des Brückenelements an, welche deren Aufbau und Funktion betreffen. Durch die Gestaltung des Brückenelements als Bandbrücke wird eine schonende und störungsfreie Förderung der Artikel von einem Führungsbahnabschnitt zum anderen gewährleistet. Dabei ist durch die Anordnung des Brückenelements in dem von den Wendeln umschlossenen Raum geringer Platzbedarf sichergestellt, wobei außerdem außerhalb der Wendeln keine beim Betrieb bewegten Teile erforderlich sind. Anspruch 7 gibt einen Betriebsmodus der Förderstrecke an, bei dem das Verfahren des Brückenelements von vorgegebenen Betriebsparametern abhängig gemacht wird. Die Ansprüche 8 bis 12 enthalten Merkmale eines als Band- oder Kettenförderers ausgebildeten Fördermittels. Der Einsatz eines einzigen, die Aufgabezone mit der Abgabezone verbindenden Bandförderers hat zur Folge, daß die Artikel nicht von einem Förderer auf einen anderen umgeladen werden müssen. Das trägt zur Schonung der Artikel bei, was insbesondere für die Förderung von Zigaretten im Massenstrom von Bedeutung ist. Die Ansprüche 10 bis 12 beziehen sich auf die Rückführung des Rücklauftrums des Bandförderers von der Abgabezone zur Aufgabezone und auf eine diese Rückführung unterstützende besondere Ausgestaltung des Brückenelements. Die Rückführung des Rücklauftrums durch die vom Fördertrum des Bandförderers nicht genutzten Teillängen der wendelförmigen Führungsbahnabschnitte erspart einen separaten Bandspeicher für das Rücklauftrum und stellt sicher, daß Längenänderungen des Fördertrums aus dem Rücklauftrum kontrolliert kompensiert werden können.

Die Ansprüche 13 bis 17 enthalten Merkmale einer anderen Ausführungsform der Fördervorrichtung nach der Erfindung, bei der durch die beiden wendelförmigen Führungsbahnabschnitte zwei separat angetriebene Bandförderer geführt sind. Die Ansprüche 15 bis 17 betreffen eine spezielle Ausbildung des Brückenelements für diese Vorrichtungsvariante. In diesem Fall ist das Brückenelement vorzugsweise als Bandwagen ausgebildet, der für das Umleiten der Förderstrecke von einer Führungsbahnwendel in die andere separat angetriebene Fördermittel aufweist. Damit werden die Artikel entlang der Förderstrecke von einer Führungsbahnwendel in die andere überführt, ohne daß ihre Orientierung verändert wird. Obwohl die Artikel von dem ersten Bandförderer abgenommen und auf den zweiten Bandförderer abgelegt werden müssen, bedeutet dies eine schonende Förderung der Artikel.

Die Erfindung bietet den Vorteil, daß die Förderstrecke dank der Führungsbahnwendeln und des verstellbaren Brückenelements einen Durchlaufspeicher großer Aufnahmekapazität darstellt. Diese ist besonders geeignet und vorgesehen für Zigaretten und andere stabförmige Artikel der tabakverarbeitenden Industrie, aber auch für Packungen und andere einzelne Gegenstände, die in dichter Folge oder mit Abstand zueinander die Förderstrecke durchlaufen können. Da es sich um einen Durchlaufspeicher handelt, hat diese Fördervorrichtung den weiteren Vorteil, daß zuerst aufgenommene Artikel auch zuerst wieder abgegeben werden, so daß keine Gefahr der Überlagerung einzelner Artikel besteht. Die Fördervorrichtung verringert daher besonders bei empfindlichen Gut die Gefahr von Ausschußerzeugung. Der konstruktive Aufbau der erfindungsgemäß vorgeschlagenen Fördervorrichtung hat den weiteren Vorteil, daß sie auf engem Raum viel Speichervolumen bietet. Außerdem ist die vorgeschlagene Fördervorrichtung sehr flexibel und bietet viele Variationsmöglichkeiten, so daß sie an viele Gegebenheiten optimal angepaßt werden kann.

Die Erfindung wird nun anhand der Zeichnung näher erläutert.

Es zeigen:
- Figuren 1 bis 6: jeweils eine perspektivische Ansicht und eine Draufsicht dreier unterschiedlicher Ausführungsbeispiele der Vorrichtung nach der Erfindung in schematischer Darstellung,
- Figur 7: eine separate Darstellung einer Bandbrücke gemäß Figur 1 und
- Figur 8: einen Schnitt durch einen Führungsbahnträger entlang der Line H-H in Figur 7.

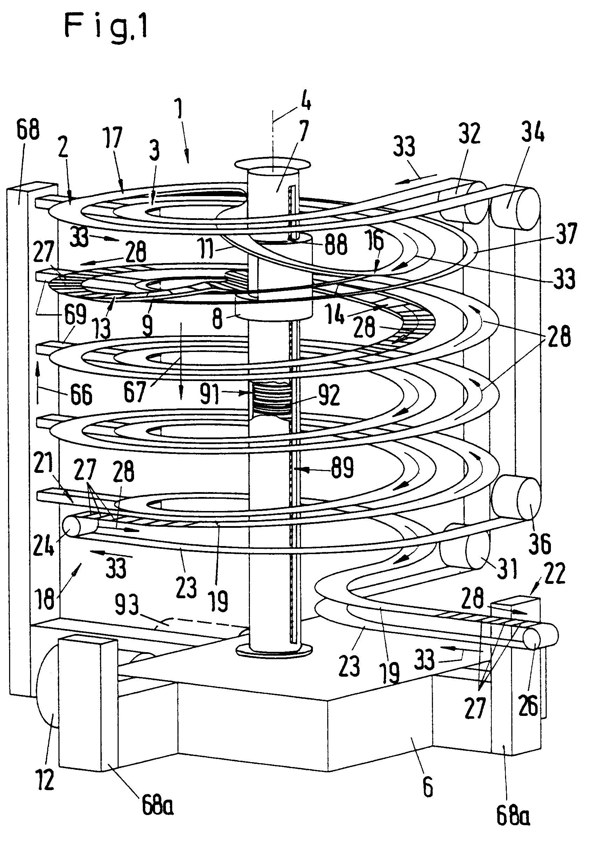

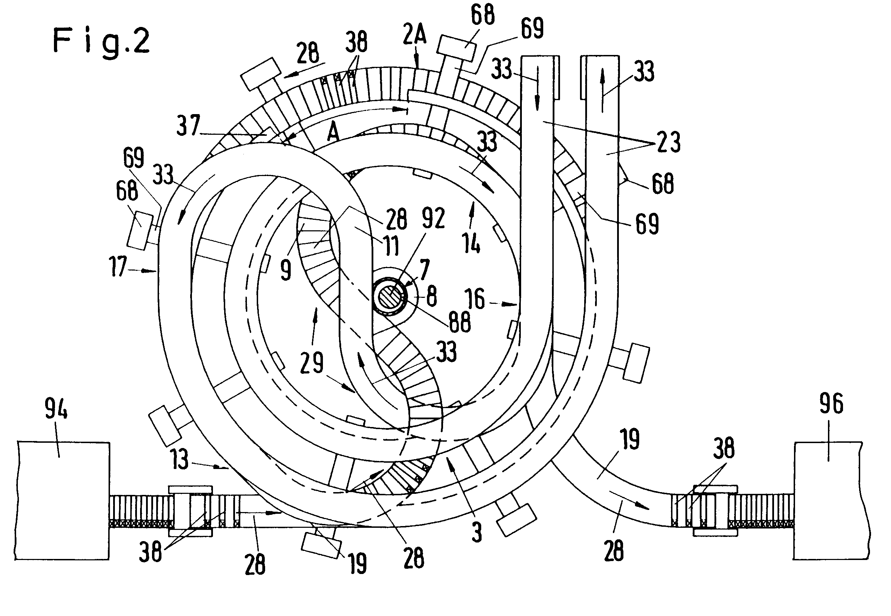

Ein erstes Ausführungsbeispiel der Vorrichtung nach der Erfindung ist in den Figuren 1 und 2 in einer perspektivischen Ansicht und einer schematischen Draufsicht dargestellt. Wie in Figur 1 zu erkennen ist, weist die Vorrichtung eine Führungsbahn 1 mit zwei Führungsbahnabschnitten 2 und 3 auf, die konzentrisch mit gleicher Steigung wendelförmig um eine gemeinsame vertikale Achse 4 herum angeordnet sind. Die beiden Führungsbahnwendeln 2 und 3 haben im gezeigten Ausführungsbeispiel der Erfindung unterschiedliche Radien und verlaufen parallel zueinander. Die Führungsbahnwendel 3 liegt konzentrisch innerhalb der Führungsbahnwendel 2. Die Führungsbahnwendeln sind vom äußeren Umfang her von einem Gestell gehalten und gestützt, von dem in Figur 1 nur ein Sockel 6 und eine Säule 68 mit etwa radial nach innen ragenden Stützarmen 69 zum Tragen der Führungsbahnwendeln schematisch dargestellt sind. In der Draufsicht der Figur 2 ist zu erkennen, daß im gezeigten Ausführungsbeispiel acht rings um die Führungsbahnwendeln 2 und 3 aufgestellte Säulen 68 mit freitragenden Stützarmen 69 die Führungsbahnwendeln tragen. In Figur 1 sind die Positionen weiterer zwei Säulen durch die Säulenstümpfe 68a angedeutet. Die anderen Säulen und Stützarme sind der besseren Übersichtlichkeit wegen weggelassen.

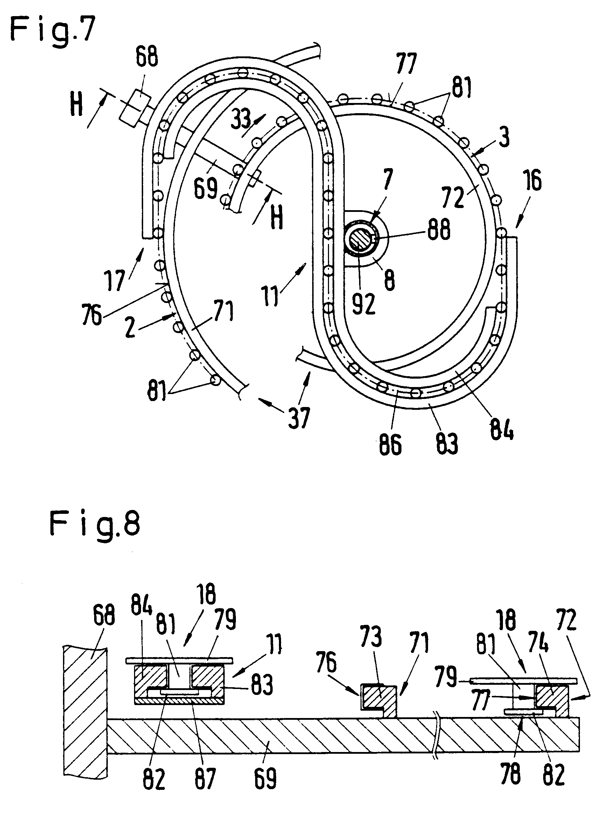

Die Anordnung der Führungsbahnen 2 und 3 auf den Stützarmen 69 und ihre Ausbildung werden im Zusammenhang mit den Figuren 7 und 8 weiter unten näher beschrieben.

Konzentrisch zur Achse 4 ist eine auf dem Sockel 6 drehbar gelagerte zentrale Säule 7 vorgesehen, an der ein Träger 8 für Brückenelemente 9 und 11 verdrehfest angebracht und axial auf und ab bewegbar ist. Der Drehantrieb der Säule 7 je nach Bedarf in die eine oder andere Richtung erfolgt über bekannte, nicht dargestellte Getriebemittel mittels eines Motors 12.

Der Träger 8 umfaßt die im Ausführungsbeispiel der Figuren 1 und 2 zylindrische Säule 7 ringförmig, wobei eine nach innen gerichtete Nase 88 in einem in der Säule 7 achsparallel verlaufenden Führungsschlitz 89 eingreift.

Die Säule 7 selbst ist hohl ausgebildet und weist einen im wesentlichen kreiszylindrischen Innenraum 91 auf. In diesen zylindrischen Innenraum 91 ist eine Gewindespindel 92 eingesetzt, die verdrehfest mit dem Sockel 6 verbunden oder drehbar auf ihm gelagert und unabhängig von der Säule 7 mit einem Motor 93 antreibbar ist, der in Figur 1 gestrichelt angedeutet ist. Die Gewindespindel kann auch über ein entsprechendes Getriebe gemeinsam mit der Säule 7 vom Motor 12 angetrieben sein. In die Windung der Gewindespindel 92 greift die Nase 88 des Trägers 8 oder ein an der Nase angebrachtes, nicht dargestelltes Mitnehmerelement ein.

Wird die Säule 7 vom Motor 12 in Rotation versetzt, so dreht sich der Träger 8 mit den Brückenelementen 9 und 11 im selben Sinne synchron mit. Entspricht die Spindelsteigung der Steigung der Führungsbahnwendeln, so kann die Gewindespindel 92 verdrehfest mit dem Sockel 6 verbunden sein. Wird die Säule 7 mit dem Träger 8 relativ zur feststehenden Gewindespindel 92 gedreht, so bewirkt die in den Gewindegang der Spindel eingreifende Nase 88, daß der Träger 8 mit den Brückenelementen 9 und 11 je nach der Drehrichtung auf- oder abbewegt wird, wobei seine axiale Verstellung beim Drehen gerade der Steigung der Führungsbahnwendeln entspricht. Unterscheidet sich die Spindelsteigung von der Steigung der Führungsbahnwendeln 2 und 3, so ist zusätzlich eine Drehung der Gewindespindel 92 erforderlich, um die axiale Verstellung des Trägers 8 an die Steigung der Führungsbahnwendeln 2 und 3 anzupassen. In diesem Fall ist auch die Gewindespindel 92 drehbar gelagert und separat antreibbar. Hierfür ist z.B. der in Figur 1 gestrichelt angedeutete Antriebsmotor 93 vorgesehen.

Die zusammen mit dem Träger 8 bewegten Brückenelemente 9 und 11 verbinden an axial zueinander versetzten Positionen jeweils die beiden Führungsbahnwendeln 2 und 3. Das Aufnahmeende 13 des Brückenelements 9 korrespondiert dabei mit der äußeren Führungsbahnwendel 2, während sein Abgabeende 14 mit der inneren Führungsbahnwendel 3 zusammenwirkt. Entsprechend wirken die Enden 16 und 17 des zweiten Brückenelements 11 mit der inneren und der äußeren Führungsbahnwendel zusammen. Da die rotatorische und axiale Verstellung des Trägers 8 in Übereinstimmung mit der Steigung der Führungsbahnwendeln 2 und 3 erfolgt, bewegen sich die Enden 13, 14 und 16, 17 der Brückenelemente immer synchron an den Führungsbahnwendeln entlang.

Die Vorrichtung weist als Fördermittel einen Band- oder Kettenförderer 18 auf, dessen Fördertrum 19 von einer Aufgabezone 21 zu einer Abgabezone 22 und dessen Rücklauftrum 23 zurück zur Aufgabezone 21 verläuft. Der Förderer 18 wird in der Aufgabezone 21 und der Abgabezone 22 durch Rollen 24 bzw. 26 umgelenkt.

Das Fördertrum 19 des Förderers 18, dessen Belegung mit einem lückenlosen, mehrlagigen Zigarettenmassenstrom oder einem anderen Fördergut durch an einigen Abschnitten eingezeichnete Striche 27 angedeutet und dessen Laufrichtung durch Pfeile 28 verdeutlicht ist, ist ausgehend von der Aufgabezone 21 in Förderrichtung 28 auf einer Teillänge der äußeren Führungsbahnwendel 2, über das Aufnahmeende 13 auf das Brückenelement 9, von dort über das Abgabeende 14 auf die innere Führungsbahnwendel 3 und abwärts bis zur Abgabezone 22 geführt. Das als Bandbrücke zum Führen des Fördertrums 19 ausgebildete Brückenelement 9 führt das Fördertrum durch eine S-förmige Wendekurve 29 (Fig.2), so daß das Fördertrum 19, das sich in der ersten Führungsbahnwendel 2 in einer ersten Richtung 66 aufwärts bewegt, in der zweiten Führungsbahnwendel 3 in entgegengesetzter Richtung 67 abwärts bewegt wird.

Das Rücklauftrum 23 ist über Umlenkrollen 31 und 32 von oben in die vom Fördertrum 19 nicht belegte Teillänge der inneren Führungsbahnwendel 3 geführt. In dieser Führungsbahnwendel läuft das Rücklauftrum 23 in Richtung des Pfeils 67 abwärts bis zum zweiten Brückenelement 11, welches es zur äußeren Führungsbahnwendel 2 überführt. Dabei wird seine Bewegungsrichtung 33 umgekehrt, so daß es in der äußeren Führungsbahnwendel 2 in Richtung des Pfeils 66 aufwärts und von deren Ende über Umlenkrollen 34 und 36 zur Aufgabezone zurückverläuft. Auch das zweite Brückenelement 11 ist als Bandbrücke ausgebildet, die das Förderband in einer S-förmigen Wendekurve von einer Führungsbahnwendel 3 in die andere (2) führt. Angetrieben wird der Förderer über eine oder mehrere Umlenkrollen mittels in der Zeichnung nicht dargestellter Antriebsmittel, die im Gestell angeordnet sind.

In der Draufsicht der Figur 2 sind die Förderrichtung 28 des Fördertrums 19 und die Bewegungsrichtung 33 des Rücklauftrums des Förderers 18 mit mehreren entsprechend bezeichneten Pfeilen eingezeichnet. Diese Figur zeigt von oben einen Bereich 2A der äußeren Führungsbahnwendel 2, der zwischen den Enden 13 und 17 der Brückenelemente 9 und 11 liegt und der deshalb keines der Trume des Förderers trägt. In diesem Bereich 2A ist eine Führung 37 zu sehen, welche den Förderer 18 in seiner wendelförmigen Bahn hält und führt. Diese Führung 37 kann als Nut, Steg oder in anderer geeigneter Weise ausgebildet sein. Die Figuren 7 und 8 zeigen ein derzeit bevorzugtes Ausführungsbeispiel der Führung 37. In Figur 7 sind in einer Draufsicht je ein Abschnitt der Führungsbahnwendeln 2 und 3 sowie das Brückenelement 11 dargestellt. Die Führungsbahnwendeln bestehen aus wendelförmig um die Achse 4 verlaufenden Führungsschienen 71 und 72, die in Figur 8 im Schnitt entlang der Linie H-H der Figur 7 zu sehen sind. Die Führungsschienen sind nebeneinander an den Stützarmen 69 befestigt, die von den Säulen 68 her in das Profil der Führungsbahnwendeln 2 und 3 hineinragen. Jede Führungsschiene 71 und 72 weist einen Schienenkopf 73 bzw. 74 auf, an dessen radialer Außenseite eine Führungsfläche 76 bzw. 77 zum Führen des Band- oder Kettenförderers 18 verläuft.

Der Förderer 18, dessen rücklaufendes Trum 23 über die in Figur 7 und 8 gezeigten Förderwegabschnitte läuft, besteht aus Kettengliedern 78 jeweils mit einer Tragplette 79 zum Transportieren des Fördergutes, einem an der Unterseite der Tragplatte angebrachten, an der Führungsfläche 76 bzw. 77 entlang bewegten Führungsbolzen 81 und einem am freien Ende des Bolzens 81 vorgesehenen, den Schienenkopf 73 bzw. 74 umgreifenden Kragen 82. Der Zug, der auf den umlaufenden Kettenförderer 18 wirkt, genügt, ihn sicher an der Führungsfläche 76 bzw. 77 zu halten und zu führen, obwohl im Bereich der Führungsbahnwendeln 2 und 3 nur diese einseitige Führung der Kette vorgesehen ist. Dies ist eine einfache und wirksame Art der Führung des Kettenförderers 18, die allerdings auch abgewandelt werden kann, ohne den Gedanken der Erfindung zu verlassen.

Wie die Figuren 7 und 8 zeigen, weist das Brückenelement 11 (wie übrigens auch das hier nicht dargestellte Brückenelement 9) der Bandbrücke einen zwischen zwei Schienen 83 und 84 gebildeten Führungsschlitz 86 auf, dessen Weite so bemessen ist, daß die Führungsbolzen 81 der Kettenglieder 78 des Kettenförderers darin in Förderrichtung bewegbar sind. Die Schienen 83 und 84 verlaufen in einem S-Bogen von dem Aufnahmeende 16 des Brückenelements am Umfang der inneren Führungsbahnwendel 3 zum Abgabeende 17 am Umfang der äußeren Führungsbahnwendel 2. Sie sind auf einer ebenso S-förmig verlaufenden Bodenplatte 87 fixiert.

Die Enden 16 und 17 des Brückenelements münden tangential am äußeren Umfang der jeweils zugehörigen Führungsbahnwendel 3 bzw. 2, ohne sie zu berühren, wie Figur 7 zeigt. Dabei ist das Ende der radial jeweils innen verlaufenden Führungsschiene 83 bzw. 84 des betreffenden Brückenelements 9 bzw. 11 ohne Berührung tangential fluchtend zur Führungsschiene 71 bzw. 72 der zugeordneten Führungsbahnwendel 2 bzw. 3 ausgerichtet, so daß, wie in Figur 7 dargestellt, ein störungsfreier Übergang der bewegten Kette 18 von der einen Führungsbahnwendel (3 bzw. 2) auf das Brückenelement (11 bzw. 9) und von diesem auf die andere Führungsbahnwendel (2 bzw. 3) möglich ist. Das Brückenelement führt den Kettenförderer 18 an seinem Ende 16 zunächst tangential von der Führungsbahn 3 weg nach außen, bis die Kragen 82 der Führungsbolzen 81 der Kettenglieder 78 von der Führungsschiene 72 frei gekommen sind. Auf diesem Wegstück werden die Kettenglieder über ihre Bolzen 81 und Kragen 82 bereits von der äußeren Schiene 83 des Brückenelements geführt. Das Brückenelement überquert dann die innere Führungsbahnwendel 3, verläuft durch den Innenraum der Wendel, überquert nacheinander wieder die innere und die äußere Führungsbahnwendel 2, bevor es den Kettenförderer 18 tangential von außen in die äußere Führungsbahn 2 abgibt. Dabei werden die Bolzen und Kragen der Kettenglieder von der jetzt außen verlaufenden zweiten Schiene 84 geführt, bis die Kragen 82 den Schienenkopf 73 hintergreifen und die Bolzen 81 der Kette 18 wieder sicher an der Führungsfläche 76 geführt sind.

In der gleichen Weise wird das mit Artikeln belegte Fördertrum des Kettenförderers 18 von der äußeren Führungsbahnwendel 2 abgehoben, über das untere S-förmig verlaufende Brückenelement 9 geführt und auf die innere Führungsbahnwendel 3 übergeben, von wo aus es in dieser abwärts läuft.

In einem in Figur 2 dargestellten Winkelabschnitt A ist die Führungsbahn 2A unterbrochen dargestellt, um die darunterliegende Windung der Führungsbahnwendel 2 in ihrer ganzen Breite zu zeigen, die das einen Zigarettenmassenstrom 38 tragende Fördertrum 19 des Förderers 18 aufwärts zum Aufnahmeende 13 des Brückenelements 9 führt.

Als Fördergut sind auf dem Fördertrum 19 des Förderers der besseren Übersichtlichkeit und der Einfachheit halber nur einzelne Zigaretten 38 dargestellt oder durch Striche 27 angedeutet. Tatsächlich ist das Fördertrum 19 von der Aufgabezone 21 bis zur Abgabezone 22 möglichst lückenlos mit einem mehrlagigen Massenstrom von Zigaretten 38 oder mit einer Reihe oder mit Stapeln anderer zu fördernder und gegebenenfalls zu speichernder Artikel belegt.

Im Normalbetrieb, in dem von der vorausgehenden Maschine 94, beispielsweise einer Zigarettenherstellungsmaschine des Typs PROTOS der Anmelderin, ebensoviele Artikel an die Aufgabezone 21 des Fördertrums 19 abgegeben werden wie aus der Abgabezone 22 an die folgende Verarbeitungsmaschine 96, beispielsweise eine Packmaschine des Typs COMPAS der Anmelderin, weitergegeben werden, durchlaufen alle Artikel mit dem Fördertrum dieselbe, gleichbleibende Förderweglänge. Der Träger 8 mit den Brückenelementen 9 und 11 behält in diesem Falle seine Position unverändert bei.

In dem in Figur 1 dargestellten Zustand hat die Fördervorrichtung nahezu ihre maximale Speicherkapazität erreicht, weil der Träger 8 mit den Brückenelementen 9 und 11 fast am oberen Ende seiner Aufwärtsbewegung steht. Wenn nun die der Aufgabezone 21 des Fördertrums 19 vorgeordnete Maschine 94 ausfällt und keine Artikel mehr an das Fördertrum abgibt, wird die in der Aufgabezone befindliche Umlenkrolle 24 angehalten. Da die die von der Abgabezone 22 abgegebenen Artikel verarbeitende Maschine 96 aber weiterarbeitet, läuft die Umlenkrolle 26 weiter um. Dabei zieht die Umlenkrolle 26 das mit Artikeln 38 belegte Fördertrum 19 aus der inneren Führungsbahnwendel 3 ab. Gleichzeitig rotiert die Säule 7 mit dem Träger 8 und den Brückenelementen 9 und 11 und bewegt sich dabei entsprechend der Steigung der Führungsbahnwendeln abwärts. Dadurch wird über das Brückenelement 9 das Fördertrum auch aus der äußeren Führungsbahnwendel 2 abgezogen, so daß sich die vom Fördertrum 19 belegte Teillänge beider Führungsbahnwendeln 2 und 3 entsprechend verkürzt. Dieser Vorgang kann fortgesetzt werden, bis sich der Träger 8 mit den Brückenelementen 9 und 11 in seiner unteren Grenzposition befindet. In dieser Position ist die Förderstrecke in der Fördervorrichtung auf ihr Minimum reduziert. In dem gleichen Maße wie sich das Fördertrum 19 verkürzt, verlängert sich das Rücklauftrum des Förderers 1. Dieses bewegt sich bei nichtrotierender Rolle 24 über die Umlenkrollen 31 und 32 in Pfeilrichtung 67 von oben in die vom Fördertrum nichtbelegte Teillänge der inneren Führungsbahnwendel 3 und wird vom Brückenelement 11, das sich zusammen mit dem Träger 8 und dem anderen Brückenelement 9 abwärts bewegt, auf der inneren Führungsbahnwendel 3 und über das Brückenelement 11 auch auf der äußeren Führungsbahnwendel zunehmend abgelegt. In demselben Maße wie der Träger 8 mit den Brückenelementen 9 und 11 abwärts wandert, vergrößert sich die von dem Rücklauftrum in den Führungsbahnwendeln 2 und 3 belegte Teillänge. Die Vorrichtung stellt also nicht nur einen Durchlaufspeicher mit veränderbarer Kapazität, sondern auch einen Bandspeicher für entsprechend unterschiedliche Längen des Rücklauftrums dar.

Wenn umgekehrt die die Artikel aus der Abgabezone 22 abnehmende Maschine ausfällt während die die Artikel abgebende Maschine weiterläuft, wird der Förderweg der Artikel in der Führungsbahn 1 durch Heraufbewegen des Trägers 8 mit den Brückenelementen 9 und 11 bei angehaltener Umlenkrolle 26 verlängert, indem die in den Führungsbahnwendeln 2 und 3 vom Fördertrum belegte Teillänge vergrößert wird. Die dafür erforderliche Verlängerung des Fördertrums 19 wird aus einer entsprechenden Verkürzung des Rücklauftrums 23 gespeist, das bei stillstehender Umlenkrolle 26 über die Rollen 24, 36 und 34 in demselben Maß aus dem oberen Teil der Führungsbahnwendeln 2 und 3 abgezogen wird, in dem die Länge des Fördertrums 19 zunimmt. Durch Drehen und gleichzeitiges Auf- und Abfahren des Trägers 8 mit den Brückenelementen 9 und 11 können also Leistungsdifferenzen der über die Fördervorrichtung verbundenen Maschinen ausgeglichen werden. Dabei kann die Speicherkapazität bei relativ kleinen Platzbedarf nahezu beliebig groß ausgebaut werden, ohne daß einzelne Artikel oder Artikelgruppen unter den damit verbundenen negativen Folgeerscheinungen durch zu langen Aufenthalt in der Förderstrecke überaltern und Ausschuß werden.

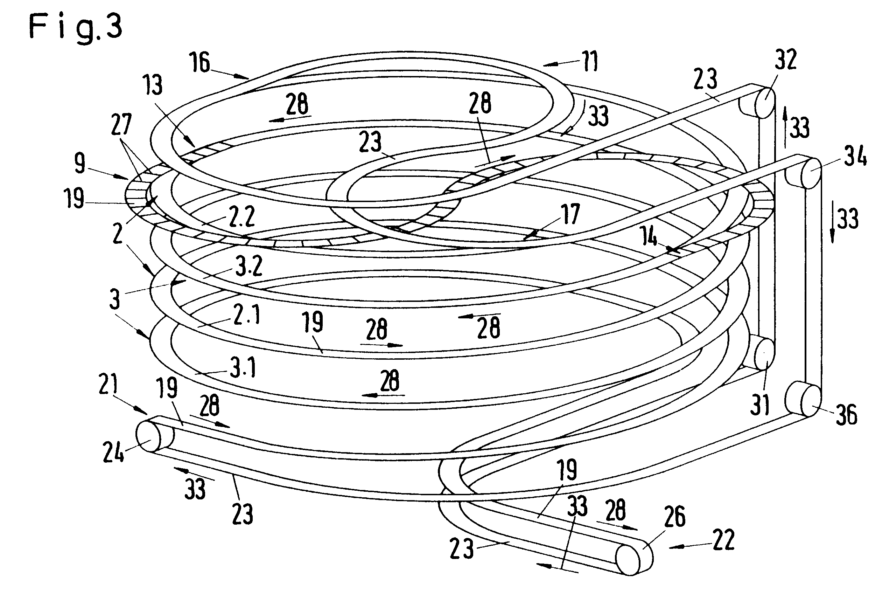

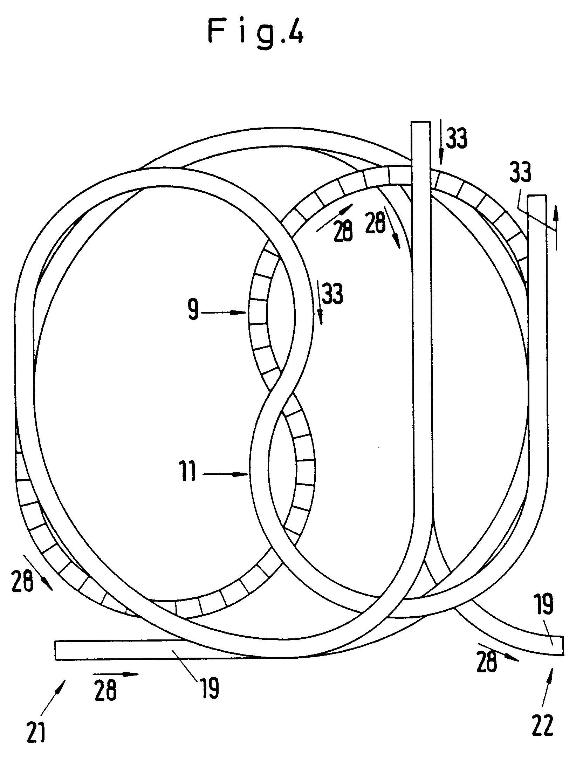

Die Figuren 3 und 4 zeigen in einer perspektivischen Ansicht und einer Draufsicht in schematischer Darstellung eine zweite Ausführung der Vorrichtung nach der Erfindung. Gleiche Teile sind in dieser Darstellung mit denselben Bezugszeichen versehen wie in den Figuren 1 und 2. Diese Ausführung der Fördervorrichtung nach der Erfindung unterscheidet sich von der in den Figuren 1 und 2 dargestellten im wesentlichen dadurch, daß die Führungsbahnwendeln 2 und 3 denselben Durchmesser haben, also im selben radialen Abstand um eine gemeinsame zentrale Achse verlaufen, die hier nicht dargestellt ist. Dabei liegen die Windungen 2.1, 2.2 usw. der Führungsbahnwendel 2 zwischen den Windungen 3.1, 3.2 usw. der Führungsbahnwendel 3. Das Fördertrum 19 des Förderers verläuft von der Aufgabezone 21 her zunächst aufwärts in Förderrichtung 28 in der Führungsbahnwendel 2, wird über das Brückenelement 9, wie im Zusammenhang mit den Figuren 1 und 2 beschrieben, in die Führungsbahnwendel 3 umgelenkt, läuft in dieser abwärts und gelangt schließlich zur Abgabezone 22. Das Rücklauftrum 23 läuft über die Umlenkrollen 31 und 32 zunächst von oben in die Führungsbahnwendel 3 hinein, läuft in der von dem Fördertrum nicht besetzten Teillänge dieser Führungsbahnwendel 3 abwärts bis zum Brückenelement 11, wird von dem Brückenelement 11 in die zweite Führungsbahnwendel 2 umgelenkt, in dieser nach oben geführt und gelangt schließlich über die Umlenkrollen 34 und 36 zurück zur Aufgabezone 21. Die Bewegungsrichtung des Rücklauftrums ist mit den Pfeilen 33 markiert. Das mit Artikeln belegte Brückenelement 9, das das Fördertrum 19 von der Wendel 2 zur Wendel 3 überführt, ist zur besseren Unterscheidung mit Querstrichen 27 versehen. Der Betrieb der Vorrichtung läuft ebenso ab, wie im Zusammenhang mit den Figuren 1 und 2 beschrieben. Der Vorzug des Ausführungsbeispiels der Vorrichtung nach den Figuren 3 und 4 besteht darin, daß die Krümmungsradien sowohl in den Führungsbahnwendeln als auch in den Brückenelementen größer sind als bei der Ausführungsform nach der Figur 1. Das ermöglicht eine bessere Schonung empfindlicher Artikel während des Transports.

Auch bei der in den Figuren 3 und 4 dargestellten Ausführungsform der Erfindung überschneiden sich die Enden 13 und 14 bzw. 16 und 17 der Brückenelemente 9 und 11 tangential mit den jeweils zugeordneten Führungsbahnwendeln 2 bzw. 3. Deutlich ist das an dem Aufnahmeende 13 und dem Abgabeende 14 des Brückenelements 9 in den Figuren 3 und 4 zu erkennen. Auch diese Maßnahme vergrößert den Kurvenradius des Brückenelements 9, was ebenfalls zur Schonung der Artikel während des Transports beiträgt.

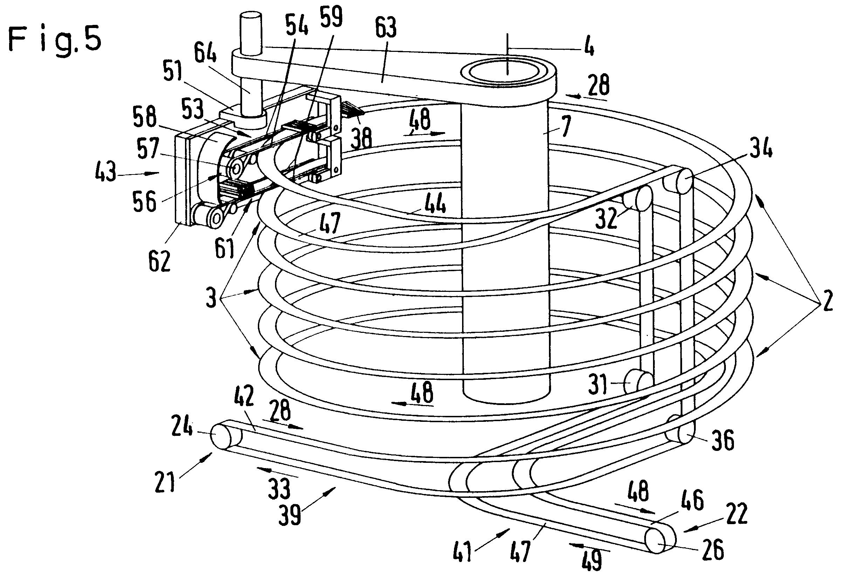

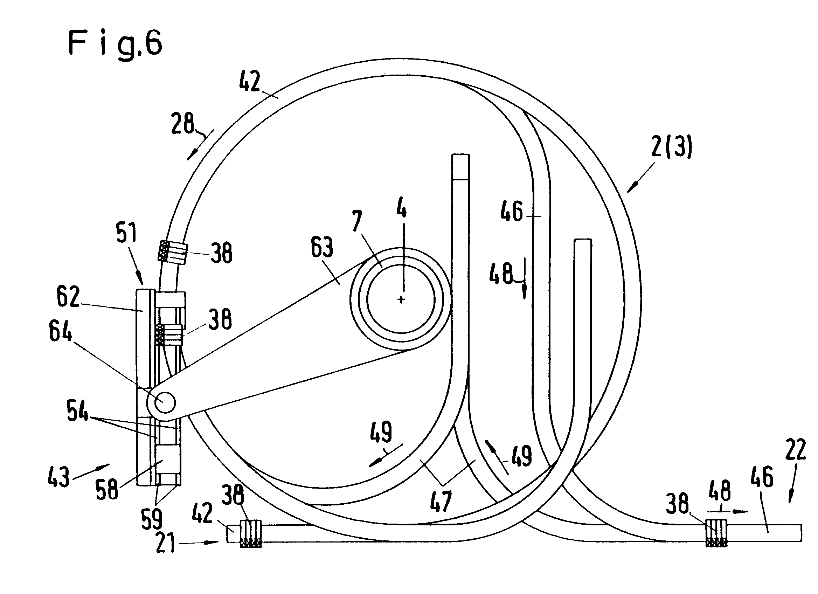

Eine weitere Ausführungsform der Erfindung ist in den Figuren 5 und 6 ebenfalls in einer perspektivischen Ansicht und einer schematischen Draufsicht dargestellt. Gleiche Teile sind wieder mit denselben Bezugszeichen versehen wie in den Figuren 1 bis 4. Wie bei der Ausführung nach den Figuren 3 und 4 sind auch hier zwei Führungsbahnwendeln 2 und 3 vorgesehen, die mit übereinstimmendem Radius und gleicher Steigung konzentrisch um eine gemeinsame Achse 4 verlaufen. Anders als in den zuvor beschriebenen Ausführungsbeispielen sind hier aber zwei separat antreibbare Band- oder Kettenförderer 39 bzw. 41 vorgesehen. Das Fördertrum 42 des Förderers 39 läuft von der Aufgabezone 21 ausgehend in Förderrichtung 28 in der Führungsbahnwendel 2 aufwärts bis zu einem später noch zu beschreibenden Brückenelement 43, von dem aus das Rücklauftrum 44 des Förderers 39 über die Umlenkrollen 34 und 36 zur Umlenkrolle 24 der Aufgabezone 21 zurückgeführt ist. Das Fördertrum 46 des zweiten Förderers 41 verläuft in der zweiten Führungsbahnwendel 3 ausgehend von dem Brückenelement 43 abwärts zur Abgabezone 22, und sein Rücklauftrum 47 ist von der Abgabezone 22 über die Umlenkrollen 31 und 32 von oben her in die zweite Führungsbahnwendel 3 eingeführt und endet am Brückenelement 43. Die Förderrichtung des Förderers 41 ist mit 48 bezeichnet.

Die Pfeile 33 bezeichnen die Bewegungsrichtung des Rücklauftrums des ersten Förderers 39 und die Pfeile 49 markieren die Bewegungsrichtung des Rücklauftrums 47 des Förderers 41.

Das Brückenelement 43 ist beim Ausführungsbeispiel der Figuren 5 und 6 als Bandwagen 51 ausgebildet, der am äußeren Umfang der Führungsbahnwendeln 2 und 3 verfahrbar ist und die Förderstrecke von der ersten Führungsbahnwendel 2 auf die zweite Führungsbahnwendel 3 umlenkt. Der Bandwagen 51 weist einen Entnahmeförderer 53 auf, der aus zwei das Fördertrum 42 des Förderers 39 auf beiden Seiten tangierenden Förderbändern 54 besteht. Die Bänder 54 des Entnahmeförderers 53 heben den vom Förderer 39 geförderten Artikelstrom 38 von dessen Fördertrum 42 ab und bewegen ihn tangential zur Führungsbahnwendel 2 zu einer als Vertikalförderstrecke ausgebildeten Umlenkzone 56. Die Umlenkzone wird einerseits von der rückwärtigen Umlenkrolle 57 des Entnahmeförderers 53 und andererseits von einem Umlenkblech 58 begrenzt. Sie mündet auf einem aus zwei Förderbändern 59 bestehenden Rückführförderer 61, der die umgelenkten Artikel in umgekehrter Förderrichtung 48 tangential auf dem Fördertrum 46 des zweiten Förderers 41 in der Führungsbahnwendel 3 ablegt. Der Entnahmeförderer 53 und der Rückführförderer 61 sind an einem Chassis 62 gelagert, das an einer von einem Dreharm 63 gehaltenen Hubstange 64 auf und ab bewegbar ist. Der Dreharm ist an einer zur Achse 4 konzentrischen Säule 7 in einer horizontalen Ebene drehbar angebracht. Die Wendeln sind wie bei der Anordnung nach Figur 1 an von Säulen getragenen Stützarmen angebracht. Die Säulen stehen aber hier im Inneren des von den Wendeln umgebenen Raumes, um die Bewegung des Bandwagens nicht zu verhindern. Die Säulen- und Stützarmanordnung ist in der Zeichnung nicht dargestellt.

Zum Verändern der Länge der Förderstrecke in den beiden Führungsbahnwendeln 2 und 3 wird der Bandwagen 51 durch Drehen des Dreharms 63 um die Achse 4 und durch gleichzeitiges Verstellen der Höhe des Bandwagens entlang der Hubstange 64 entsprechend verfahren, so daß der Bandwagen an den Windungen der Führungsbahnwendeln entlang bewegt wird. Dabei wandern der Entnahmeförderer und der Rückführförderer entsprechend an den Wendeln entlang und verändern die Speicherkapazität der Förderstrecke. Soll die Speicherkapazität verkleinert werden, so wird der Bandwagen mittels des Dreharms 63 im Uhrzeigersinn bewegt und gleichzeitig entlang der Hubstange 64 entsprechend der Wendelsteigung gesenkt. Zum Vergrößern der Speicherkapazität wird in entgegengesetzter Richtung verfahren. Die Figur 5 zeigt den Bandwagen in einer Position, welche der Förderstrecke ihre größte Speicherkapazität gibt.

Diese Ausführungsform der Fördervorrichtung nach der Erfindung hat den Vorteil, daß die Artikel im Massenstrom beim Übergang von der einen Führungsbahnwendel zur anderen nicht umorientiert werden müssen.

In Figur 5 sind einige Artikel 38 eingezeichnet, wobei zu erkennen ist, daß sie axial nach außen und innen über die Fördertrume 42 bzw. 46 der Förderer 39 bzw. 41 herausragen, so daß sie von den Bändern 54 des Entnahmeförderers 53 erfaßt und von dem Fördertrum des Förderers 39 abgehoben werden können. Der Förderer 39 ist im Bogen unter dem Rücklauftrum eines der Bänder 54 des Entnahmeförderers hindurchgeführt. Entsprechend ist die Anordnung beim Rückführförderer 61.

In der Zeichnung sind die Führungsbahn und die Führungsbahnabschnitte nur schematisch durch den Bandverlauf angedeutet, um die Anschaulichkeit der Darstellung nicht zu beeinträchtigen. Aus demselben Grund wurde außer in Figur 1 auf die Darstellung eines die Wendeln tragenden Gestells und der Antriebsmittel für die Bewegung der Förderer verzichtet. Es versteht sich, daß ein Gestell zum Tragen der Führungsbahnwendeln 2 und 3 und die Antriebe für die Förderer 39 und 41 bei der Ausführungsform der Figuren 5 und 6 im Innern der Wendeln angeordnet sein sollten, um einen freien Umlauf des Bandwagens 51 zu ermöglichen. Andrerseits ist es möglich, den Bandwagen 51 der Innenseite der Führungsbahnwendeln zuzuordnen. In diesem Fall verlaufen der Entnahmeförderer 53 und der Rückführförderer 61 in einem Bogen nach innen zur Umlenkzone 56. Diese Möglichkeit ist von der Erfindung mit umfaßt. Das die Wendeln 2 und 3 tragende Gestell liegt dann entsprechend an der Außenseite der Wendeln.

## Patentansprüche

1. Vorrichtung zum Fördern von Artikeln (38)entlang einer Förderstrecke, insbesondere zum Fördern eines Massenstroms stabförmiger Artikel der tabakverarbeitenden Industrie, mit Fördermitteln (18,39,41), welche die Artikel von einer Aufgabezone (21) entlang der Förderstrecke zu einer Abgabezone (22) bewegen, einer die Fördermittel wenigstens in einem Förderstreckenabschnitt führenden Führungsbahn (1), welche zwei als Wendeln ausgebildete Führungsbahnabschnitte (2,3) aufweist, wobei die Förderstrecke in einer der Führungsbahnwendeln (2) in einer ersten Richtung (66) und in der anderen (3) in einer entgegengesetzten zweiten Richtung (67) verläuft und Mitteln (9,43) zum Verändern der Länge der Förderstrecke zwischen der Aufgabezone (21) und der Abgabezone (22), dadurch gekennzeichnet, daß die beiden Führungsbahnwendeln (2,3) konzentrisch um eine gemeinsame vertikale Achse (4) herum angeordnet sind und daß die Förderstrecke entlang wenigstens einer Teillänge jedes Führungsbahnabschnittes geführt ist.

2. Vorrichtung nach Anspruch 1, dadurch gekennzeichnet, daß die beiden Führungsbahnwendeln (2,3) in demselben Radius um die gemeinsame vertikale Achse (4) verlaufen und daß die Windungen (3.1,3.2) der einen Wendel (3) im freien Raum zwischen den Windungen (2.1,2.2) der anderen Wendel (2) angeordnet sind.

3. Vorrichtung nach Anspruch 1 oder 2, dadurch gekennzeichnet, daß als Mittel zum Verändern der Länge der Förderstrecke ein die beiden Führungsbahnabschnitte (2,3) verbindendes, die Förderstrecke von einem der Führungsbahnabschnitte (2) zum anderen (3) überführendes Brückenelement (9,43) vorgesehen ist und daß das Brückenelement relativ zu den beiden Führungsbahnabschnitten verfahrbar ist.

4. Vorrichtung nach Anspruch 3, dadurch gekennzeichnet, daß das Brückenelement (9) ein die Förderstrecke von einem der Führungsbahnabschnitte (2) auf das Brückenelement umleitendes Aufnahmeende (13) und ein die Förderstrecke auf den anderen Führungsbahnabschnitt (3) weiterführendes Abgabeende (14) aufweist und daß das Aufnahmeende (13) und das Abgabeende (14) beim Verfahren des Brückenelements (9) an dem jeweils zugehörigen Führungsbahnabschnitt (2 bzw. 3) entlang in bzw. entgegen der Förderrichtung (28) der Artikel (38) bewegt werden.

5. Vorrichtung nach Anspruch 3 oder 4, dadurch gekennzeichnet, daß das Brückenelement (9) als die Förderstrecke von einer Führungsbahnwendel (2) zur anderen (3) überleitende Bandbrücke ausgebildet ist, welche zum Führen wenigstens eines Bandförderers (18) ausgebildet ist und die Förderrichtung des ersten Führungsbahnabschnittes (2) in die entgegengesetzte Förderrichtung des zweiten Führungsbahnabschnitts (3) umkehrt.

6. Vorrichtung nach einem der Ansprüche 3 bis 5, dadurch gekennzeichnet, daß das Brückenelement (9) als Bandbrücke ausgebildet ist, welche ausgehend von einer der Führungsbahnwendeln (2) durch den von den Wendeln umschlossenen Innenraum in einer Wendekurve (29) zur anderen Führungsbahnwendel (3) führt, daß die Bandbrücke (9) an einer konzentrisch zur Achse (4) der Wendeln angeordneten Säule (7) um die Achse drehbar und axial verstellbar angeordnet ist und daß Mittel (12) zum axialen Verstellen der Bandbrücke in Abhängigkeit vom Drehwinkel und der Wendelsteigung der Führungsbahnabschnitte (2,3) vorgesehen sind.

7. Vorrichtung nach einem der Ansprüche 3 bis 6, dadurch gekennzeichnet, daß Antriebsmittel (12) zum Verfahren des Brückenelements (9) in Abhängigkeit von vorgegebenen Betriebsparametern vorgesehen sind.

8. Vorrichtung nach einem der Ansprüche 1 bis 7, dadurch gekennzeichnet, daß als Fördermittel ein Band- oder Kettenförderer (18) vorgesehen ist, dessen die Artikel (38) tragendes Fördertrum (19) von der Aufgabezone (21) in einer ersten Richtung (66) wenigstens durch eine Teillänge der ersten Führungsbahnwendel (2), über das Brückenelement (9) und in entgegengesetzter Richtung (67) durch eine entsprechende Teillänge der zweiten Führungsbahnwendel (3) zur Abgabezone (22) geführt ist und dessen leeres Rücklauftrum (23) von der Abgabezone (22) zurück zur Aufgabezone (21) verläuft.

9. Vorrichtung nach Anspruch 8, dadurch gekennzeichnet, daß das Rücklauftrum (23) des Förderers (18) auf dem Weg von der Abgabezone (22) zur Aufgabezone (21) einen veränderlichen Bandspeicher durchläuft.

10. Vorrichtung nach einem der Ansprüche 3 bis 7, dadurch gekennzeichnet, daß ein zweites Brückenelement (11) in Form einer zweiten Bandbrücke vorgesehen ist, die in vorgegebenem axialem Abstand zur ersten Bandbrücke (9) in dem von den Führungsbahnwendeln (2,3) umschlossenen Raum den einen Führungsbahnabschnitt (2) mit dem anderen (3) verbindet und die synchron mit der ersten Bandbrücke (9) verfahrbar angeordnet ist.

11. Vorrichtung nach Anspruch 10, dadurch gekennzeichnet, daß beide Bandbrücken (9,11) an einem gemeinsamen Träger (8) angebracht sind, daß der Träger an der konzentrisch zur Achse (4) der Führungsbahnwendeln (2,3) angeordneten Säule (7) um diese Achse drehbar und axial verstellbar angeordnet ist und daß Mittel (12) zum axialen Verstellen und Drehen des Trägers (8) entsprechend der Wendelsteigung der Führungsbahnabschnitte vorgesehen sind.

12. Vorrichtung nach Anspruch 10 oder 11, dadurch gekennzeichnet, daß das Fördertrum (19) des Bandförderers (18) in jeder Führungsbahnwendel (2,3) jeweils von einem Wendelende her nur eine durch die aktuelle Position der ersten Bandbrücke (9) begrenzte Teillänge der beiden Führungsbahnabschnitte (2,3) belegt und daß das Rücklauftrum (23) ausgehend von der Abgabezone (22) vom freien Ende einer der Führungsbahnwendeln (3) her in einer ersten Richtung (67) wenigstens einen Teilabschnitt der vom Fördertrum (19) nicht belegten Teillänge des Führungsbahnabschnitts (3) bis zur zweiten Bandbrücke (11), die Bandbrücke und in entgegengesetzter Richtung (66) wenigstens einen Teilabschnitt der vom Fördertrum nicht belegten Teillänge des anderen Führungsbahnabschnitts (2) zum freien Ende der Führungsbahnwendel hin durchläuft und von dort zur Aufgabezone (21) hin zurückgeführt ist.

13. Vorrichtung nach einem der Ansprüche 1 bis 7, dadurch gekennzeichnet, daß das Fördermittel einen ersten Ketten- oder Bandförderer (39) aufweist, dessen Fördertrum (42) von der Aufgabezone (21) her in einer ersten Richtung (66,28) durch eine der Führungsbahnwendeln (2) und dessen Rücklauftrum (44) zurück zur Aufgabezone (21) verläuft, daß das Fördermittel einen zwei-ten Ketten- oder Bandförderer (41) umfaßt, dessen Fördertrum (46) in einer der ersten entgegengesetzten Richtung (67,48) durch die andere Führungsbahnwendel (3) zur Abgabezone (22) und dessen Rücklauftrum (47) von dort zurück zum Eintritt in die Führungsbahnwendel (3) verläuft und daß das Brückenelement (43) Mittel (53,54) zum Abnehmen der geförderten Artikel (38) vom ersten Bandförderer (39) und Mittel (56,59,61) zum Überführen und zum Auflegen der abgenommenen Artikel in entgegengesetzter Förderrichtung (48) auf den zweiten Bandförderer (41) aufweist.

14. Vorrichtung nach Anspruch 13, dadurch gekennzeichnet, daß die beiden Ketten- oder Bandförderer (39,41) separat mit unterschiedlichen Geschwindigkeiten antreibbar sind.

15. Vorrichtung nach Anspruch 13 oder 14, dadurch gekennzeichnet, daß die beiden Führungsbahnwendeln (2,3) mit gleicher Steigung in demselben Radius um ihre gemeinsame vertikale Achse (4) verlaufen, daß die Windungen der einen Wendel (2) im freien Raum zwischen den Windungen der anderen Wendel (3) angeordnet sind, daß das Brückenelement (43) als Bandwagen (51) ausgebildet ist, der einen die Förderstrecke von einer der Führungsbahnwendeln (2) zu einer Umlenkzone (56) führenden Entnahmeförderer (53) und einen die Förderstrecke aus der Umlenkzone (56) zur anderen Führungsbahnwendel (3) zurückführenden Rückführförderer (61) aufweist, und daß der Bandwagen (51) an den Führungsbahnwendeln (2,3) entlang verfahrbar ist.

16. Vorrichtung nach Anspruch 15, dadurch gekennzeichnet, daß der Rückführförderer (61) des Bandwagens (51) etwa im Abstand benachbarter Windungen der Führungsbahnwendeln (2,3) im wesentlichen parallel unter dem Entnahmeförderer (53) angeordnet ist, daß der Entnahmeförderer und der Rückführförderer in entgegengesetzte Richtungen antreibbar sind und daß die Umlenkzone (56) als vom Ende des Entnahmeförderers abwärts zum Rückführförderer gerichteter Förderwegabschnitt ausgebildet ist.

17. Vorrichtung nach Anspruch 15 oder 16, dadurch gekennzeichnet, daß der Entnahmeförderer (53) die Artikel (38) von einer Windung einer der Führungsbahnwendeln (2) abnimmt und daß der Rückführförderer (61) die Artikel in entgegengesetzter Förderrichtung (48) in die darunterliegende Windung der anderen Führungsbahnwendel (3) abgibt.

## Claims

1. Apparatus for conveying articles (38) along a conveying section, in particular for conveying a mass flow of rod-shaped articles of the tobacco-processing industry, having conveying means (18,39,41) which move the articles from a charging zone (21) along the conveying section to a discharging zone (22), a guideway (1) which guides the conveying means at least in a portion of the conveying section and has two guideway portions (2,3) configured as helixes, the conveying section running in one of the guideway helixes (2) in a first direction (66) and in the other (3) in an opposite second direction (67), and means (9,43) for changing the length of the conveying section between the charging zone (21) add the discharging zone (22), characterised in that the two guideway helixes (2,3) are arranged concentrically about a common vertical axis (4) and in that the conveying section is guided along at least a part-length of each guideway portion.

2. Apparatus according to Claim 1, characterised in that the two guideway helixes (2,3) run with the same radius about the common vertical axis (4) and in that the turns (3.1,3.2) of one helix (3) are arranged in the free space between the turns (2.1,2.2) of the other helix (2).

3. Apparatus according to Claim 1 or 2, characterised in that a bridge element (9, 43), which connects the two guideway portions (2,3) and transfers the conveying section from one of the guideway portions (2) to the other (3), is provided as the means for changing the length of the conveying section and in that the bridge element is movable relative to the two guideway portions.

4. Apparatus according to Claim 3, characterised in that the bridge element (9) has a receiving end (13) which diverts the conveying section from one of the guideway portions (2) onto the bridge element and a discharging end (14) which continues the conveying section on the other guideway portion (3) and in that the receiving end (13) and the discharging end (14) are moved, upon the movement of the bridge element (9), along the respectively associated guideway portion (2 and 3) respectively in and counter to the conveying direction (28) of the articles (38).

5. Apparatus according to Claim 3 or 4, characterised in that the bridge element (9) is constructed as a band bridge which transfers the conveying section from one guideway helix (2) to the other (3), is designed to guide at least one band conveyor (18) and reverses the conveying direction of the first guideway portion (2) into the opposite conveying direction of the second guideway portion (3).

6. Apparatus according to one of Claims 3 to 5, characterised in that the bridge element (9) is constructed as a band bridge which, starting from one of the guideway helixes (2), passes through the inner space enclosed by the helixes in a winding curve (29) to the other guideway helix (3), in that the band bridge (9) is arranged on a column (7), arranged concentrically with the axis (4) of the helixes, to be rotatable about the axis and axially adjustable and in that means (12) are provided for the axial adjustment of the band bridge in dependence on the angle of rotation and the helix pitch of the guideway portions (2,3).

7. Apparatus according to one of Claims 3 to 6, characterised in that drive means (12) are provided for the movement of the bridge element (9) in dependence on preset operating parameters.

8. Apparatus according to one of Claims 1 to 7, characterised in that a band or chain conveyor (18) is provided as the conveying means, the conveying strand (19), carrying the articles (38), of which band or chain conveyor is led from the charging zone (21) in a first direction (66) at least over a part-length of the first guideway helix (2), via the bridge element (9) and in the opposite direction (67) over a corresponding part-length of the second guideway helix (3) to the discharging zone (22), and the empty return strand (23) of which band or chain conveyor runs from the discharging zone (22) back to the charging zone (21).

9. Apparatus according to Claim 8, characterised in that the return strand (23) of the conveyor (18) runs through a changeable band store on the way from the discharging zone (22) to the charging zone (21).

10. Apparatus according to one of Claims 3 to 7, characterised in that a second bridge element (11) in the form of a second band bridge is provided, which second bridge element (11), at a preset axial distance from the first band bridge (9), in the space enclosed by the guideway helixes (2,3), connects one guideway portion (2) to the other (3) and is arranged to be movable synchronously with the first band bridge (9).

11. Apparatus according to Claim 10, characterised in that both band bridges (9,11) are attached to a common carrier (8), in that the carrier is arranged on the column (7), arranged concentrically with the axis (4) of the guideway helixes (2,3), to be rotatable about this axis and axially adjustable and in that means (12) are provided for the axial adjustment and rotation of the carrier (8) in accordance with the helix pitch of the guideway portions.

12. Apparatus according to Claim 10 or 11, characterised in that the conveying strand (19) of the band conveyor (18) occupies, in each guideway helix (2,3), in each case from one helix end, only a part-length, limited by the current position of the first band bridge (9), of the two guideway portions (2,3) and in that the return strand (23), starting from the discharging zone (22), runs from the free end of one of the guideway helixes (3) in a first direction (67) over at least a portion of the part-length, not occupied by the conveying strand (19), of the guideway portion (3) as far as the second band bridge (11), over the band bridge and in the opposite direction (66) over at least a portion of the part-length, not occupied by the conveying strand, of the other guideway portion (2) towards the free end of the guideway helix and from there is led back towards the charging zone (21).

13. Apparatus according to one of Claims 1 to 7, characterised in that the conveying means has a first chain or band conveyor (39), the conveying strand (42) of which runs from the charging zone (21) in a first direction (66,28) over one of the guideway helixes (2) and the return strand (44) of which runs back to the charging zone (21), in that the conveying means comprises a second chain or band conveyor (41), the conveying strand (46) of which runs in a direction (67,48) opposite the first over the other guideway helix (3) to the discharging zone (22) and the return strand (47) of which runs from there back to the entrance to the guideway helix (3) and in that the bridge element (43) has means (53,54) for removing the conveyed articles (38) from the first band conveyor (39) and means (56,59,61) for transferring and for depositing the removed articles in the opposite conveying direction (48) onto the second band conveyor (41).

14. Apparatus according to Claim 13, characterised in that the two chain and band conveyors (39,41) are separately drivable at different speeds.

15. Apparatus according to Claim 13 or 14, characterised in that the two guideway helixes (2,3) run with the same pitch and the same radius about their common vertical axis (4), in that the turns of one helix (2) are arranged in the free space between the turns of the other helix (3), in that the bridge element (43) is constructed as a band carriage (51) which has a removing conveyor (53), leading the conveying section from one of the guideway helixes (2) to a deflecting zone (56), and a returning conveyor (61), leading the conveying section from the deflecting zone (56) back to the other guideway helix (3), and in that the band carriage (51) is movable along the guideway helixes (2,3).

16. Apparatus according to Claim 15, characterised in that the returning conveyor (61) of the band carriage (51) is arranged, approximately at the spacing of adjacent turns of the guideway helixes (2,3), substantially parallel below the removing conveyor (53), in that the removing conveyor and the returning conveyor are drivable in opposite directions and in that the deflecting zone (56) is constructed as a conveying-path portion directed from the end of the removing conveyor downwards to the returning conveyor.

17. Apparatus according to Claim 15 or 16, characterised in that the removing conveyor (53) removes the articles (38) from one turn of one of the guideway helixes (2) and in that the returning conveyor (61) discharges the articles in the opposite conveying direction (48) into the turn, lying therebelow, of the other guideway helix (3).

## Revendications

1. Dispositif pour transporter des articles (38) le long d'un trajet de convoyage, notamment pour transporter un courant massique d'articles en forme de bâtonnets dans l'industrie de transformation du tabac, comportant des moyens de convoyage (18,39,41), qui déplacent les articles depuis une zone de chargement (21) le long d'un trajet de convoyage jusqu'à une zone de déchargement (22), une voie de guidage (1) qui guide les moyens de convoyage au moins sur un tronçon du trajet de convoyage et qui possède deux tronçons (2,3) agencés sous la forme d'hélices, le trajet de convoyage dans l'une des hélices (2) de la voie de guidage s' étendant dans une première direction (66) tandis que le trajet de convoyage dans l'autre hélice (3) de la voie de guidage s'étend dans une seconde direction opposée (67), et des moyens (9,43) pour modifier la longueur du trajet de convoyage entre la zone de chargement (21) et la zone de déchargement (22), caractérisé en ce que les deux hélices (2,3) de la voie de guidage sont disposées concentriquement autour d'un axe vertical commun (4) et en ce que le trajet de convoyage est guidé le long d'au moins une partie de la longueur de chaque tronçon de la voie de guidage.

2. Dispositif selon la revendication 1, caractérisé en ce que les deux hélices (2,3) de la voie de guidage s'étendent, avec le même rayon, autour de l'axe vertical commun (4) et en ce que les spires (3.1, 3.2) d'une hélice (3) sont disposées dans l'espace libre présent entre les spires (2.1, 2.2) de l'autre hélice (2).

3. Dispositif selon la revendication 1 ou 2, caractérisé en ce qu'il est prévu, comme moyens pour modifier la longueur du trajet de convoyage, un élément formant pont (9,43), qui relie les deux tronçons (2,3) de la voie de guidage et transfère le trajet de convoyage de l'un des tronçons (2) de la voie de guidage à l'autre (3), et en ce que l'élément formant pont est déplaçable par rapport aux deux tronçons de la voie de guidage.

4. Dispositif selon la revendication 3, caractérisé en ce que l'élément formant pont (9) comporte une extrémité de réception (13), qui détourne le trajet de convoyage de l'un des tronçons (2) de la voie de guidage sur l'élément formant pont, et une extrémité de déchargement (14), qui fait se poursuivre le trajet de convoyage sur l'autre tronçon (3) de la voie de guidage, et en ce que, lors du déplacement de l'élément formant pont (9), l'extrémité de réception (13) et l'extrémité de déchargement (14) sont déplacées le long du tronçon respectivement associé (2 ou 3) de la voie de guidage, dans la direction de convoyage (28) des articles (38) ou dans la direction opposée.

5. Dispositif selon la revendication 3 ou 4, caractérisé en ce que l'élément formant pont (9) est réalisé sous la forme d'un pont formé d'une bande, qui fait passer le trajet de convoyage d'une hélice (2) à l'autre hélice (3) de la voie de guidage et qui est agencé pour le guidage d'au moins un convoyeur à bande (18) et inverse la direction de convoyage du premier tronçon (2) de la voie de guidage en la direction opposée de convoyage du second tronçon (3) de la voie de guidage.

6. Dispositif selon l'une des revendications 3 à 5, caractérisé en ce que l'élément formant pont (9) est réalisé sous la forme d'un pont en forme de bande, qui conduit depuis l'une des hélices (2) de la voie de guidage, à travers l'espace intérieur entouré par les hélices, en une courbe à inflexion (29), à l'autre hélice (3) de la voie de guidage, en ce que le pont en forme de voie (9) est disposé, de manière à pouvoir tourner autour de l'axe et à être déplaçable axialement, sur une colonne (7) disposée concentriquement à l'axe (4) des hélices, et en ce que des moyens (12) sont prévus pour le déplacement axial du pont en forme de bande en fonction de l'angle d'orientation et du pas de l'hélice des tronçons (2,3) de la voie de guidage.

7. Dispositif selon l'une des revendications 3 à 6, caractérisé en ce que des moyens d'entraînement (12) sont prévus pour déplacer l'élément formant pont (9) en fonction de paramètres prédéterminés de fonctionnement.

8. Dispositif selon l'une des revendications 1 à 7, caractérisé en ce qu'il est prévu, comme moyens de convoyage, un convoyeur à bande ou à chaînes (18), dont le brin de transport (19), qui porte les articles (38), est guidé depuis la zone de chargement (21), dans une première direction (66), au moins sur une partie de la longueur de la première hélice (2) de la voie de guidage, au moyen de l'élément formant pont (9) et, dans la direction opposée (67), sur une partie correspondante de longueur de la seconde hélice (3) de la voie de guidage jusqu'à la zone de déchargement (22) et dont le brin vide de retour (23) revient de la zone de déchargement (22) à la zone de chargement (21).

9. Dispositif selon la revendication 8, caractérisé en ce que le brin de retour (23) du convoyeur (18) traverse un accumulateur de bande variable, sur le trajet allant de la zone de déchargement (22) à la zone de chargement (21).

10. Dispositif selon l'une des revendications 3 à 7, caractérisé en ce qu'un second élément formant pont (11) est prévu sous la forme d'un second pont en forme de bande, qui, à une distance axiale prédéterminée du premier pont en forme de bande (9) relie, dans l'espace entouré par les hélices (2,3) de la voie de guidage, un tronçon (2) à l'autre tronçon (3) de la voie de guidage et qui est disposé de manière à être déplaçable en synchronisme avec le premier pont en forme de bande (5).

11. Dispositif selon la revendication 10, caractérisé en ce que les deux ponts en forme de bande (9,11) sont montés sur un support commun (8), en ce que le support est disposé sur la colonne (7) disposée concentriquement à l'axe (4) des hélices (2,3) de la voie de guidage, de manière à pouvoir tourner autour de cet axe et à être déplaçable axialement, et en ce que des moyens (12) sont prévus pour déplacer axialement et faire tourner le support (8) conformément au pas des hélices des tronçons de la voie de guidage.

12. Dispositif selon la revendication 10 ou 11, caractérisé en ce que le brin de transport (19) du convoyeur à voie (18) dans chaque hélice (2,3) de la voie de guidage n'occupe, à partir d'une extrémité de l'hélice respective, qu'une partie, limitée par la position actuelle du premier pont en forme de bande (9), de la longueur des deux tronçons (2,3) de la voie de guidage et en ce qu'à partir de la zone de déchargement (22), depuis l'extrémité libre de l'une des hélices (3) de la voie de guidage, dans une première direction (67), le brin de retour (23) parcourt au moins une partie de la longueur, non occupée par le brin de transport (19), du tronçon (3) de la voie de guidage jusqu'au second pont en forme de bande (11), le pont en forme de bande et, dans la direction opposée (66), au moins une partie de la longueur, non occupée par le brin de transport, de l'autre tronçon (2) de la voie de guidage jusqu'à l'extrémité libre de l'hélice de la voie de guidage et, à partir de là, est ramené à la zone de chargement (21).

13. Dispositif selon l'une des revendications 1 à 7, caractérisé en ce que le moyen de convoyage comporte un premier convoyeur à chaînes ou à bande (39), dont le brin de transport (42) s'étend depuis la zone de chargement (21) dans une première direction (66,28), sur l'une des hélices (2) de la voie de guidage, et dont le brin de retour (44) revient à la zone de chargement (21), en ce que le moyen de convoyage comprend un second convoyeur à chaînes ou à bande (41), dont le brin de transport (46) s'étend, dans une direction (67,48) opposée à la première direction, sur l'autre hélice (3) de la voie de guidage jusqu'à la zone de déchargement (22) et dont le brin de retour (47), à partir de là, revient à l'entrée dans l'hélice (3) de la voie de guidage, et en ce que l'élément formant pont (43) comporte des moyens (53,54) pour retirer les articles transportés (38) du premier convoyeur à bande (39), et des moyens (56,59,61) pour transférer et pour déposer les articles retirés, dans la direction de convoyage opposée (48), sur le second convoyeur à bande (41).

14. Dispositif selon la revendication 13, caractérisé en ce que les deux convoyeurs à chaînes ou à bande (39,41) peuvent être entraînés séparément à des vitesses différentes.

15. Dispositif selon la revendication 13 ou 14, caractérisé en ce que les deux hélices (2,3) de la voie de guidage s'étendent, avec un pas identique et suivant le même rayon, autour de leur axe vertical commun (4), en ce que les spires d'une hélice (2) sont disposées dans l'espace libre formé entre les spires de l'autre hélice (3), en ce que l'élément formant pont (43) est réalisé sous la forme d'un chariot à bande (51), qui comporte un convoyeur de prélèvement (53), menant le trajet de convoyage de l'une des hélices (2) de la voie de guidage à une zone de renvoi (56), et un convoyeur de retour (61), qui ramène le trajet de convoyage de la zone de renvoi (56) à l'autre hélice (3) de la voie de guidage, et en ce que le chariot à bande (51) est déplaçable le long des hélices (2,3) de la voie de guidage.

16. Dispositif selon la revendication 15, caractérisé en ce que le convoyeur de retour (61) du chariot à bande (51) est disposé sensiblement à distance de spires voisines des hélices (2,3) de la voie de guidage, essentiellement parallèlement au et au-dessous du convoyeur de prélèvement (53), en ce que le convoyeur de prélèvement et le convoyeur de retour peuvent être entraînés dans des sens opposés et en ce que la zone de renvoi (56) est agencée sous la forme d'un tronçon d'évacuation dirigé depuis l'extrémité du convoyeur de prélèvement vers l'aval en direction du convoyeur de retour.

17. Dispositif selon la revendication 15 ou 16, caractérisé en ce que le convoyeur de prélèvement (53) retire les articles (38) d'une spire de l'une des hélices (2) de la voie de guidage et en ce que le convoyeur de retour (61) délivre les articles dans la direction de convoyage opposée (48), sur la spire sous-jacente de l'autre hélice (3) de la voie de guidage.
